# EUROPEAN PATENT SPECIFICATION

(11) **EP 2 874 935 B1**
(45) Date of publication and mention of the grant of the patent: **28.11.2018**
(21) Application number: 13820562.0
(22) Date of filing: 19.07.2013
(51) Int. Cl.: B66F 3/10, B66F 7/14, B60S 9/00, F15B 15/26, B66F 3/25, B66F 3/24, F15B 15/16

(54) **JACKING DEVICE**
EINPRESSVORRICHTUNG
DISPOSITIF DE LEVAGE

(30) Priority: 20.07.2012 AU 2012903111
(43) Date of publication of application: 27.05.2015
(73) Proprietor: TFP Engineering Pty Limited, Singleton NSW 2330 (AU)
(72) Inventor: POKE, Tony Francis, Whittingham, New South Wales 2330 (AU)
(74) Representative: Zinkler, Franz
(86) International application number: PCT/AU2013/000802
(87) International publication number: WO 2014/012148

(56) References cited:
- EP-A1- 0 538 208
- EP-A1- 0 538 208
- WO-A1-2012/088019
- CN-U- 201 458 645
- US-A- 6 142 501
- US-A1- 2012 132 873
- DATABASE WPI Derwent Publications Ltd., London, GB; AN 1983-E6922K, XP003034263 & SU 931 698 B (NOVCH POLY) 05 June 1982

## Description

### BACKGROUND OF THE INVENTION

The present invention relates to a jacking device, and in particular, to a propping or jacking device which can prop or jack a load or object above a substrate surface and then retain it in an elevated position.

The present invention has particular application to lifting heavy objects, such as vehicles or other machinery and in particular, mining and earthmoving equipment, which are traditionally initially jacked up and then packing material is typically supplied thereunder, such that persons or other equipment may thereafter work below the elevated surface machinery or other load, with a relative degree of safety.

### DESCRIPTION OF THE PRIOR ART

The reference in this specification to any prior publication (or information derived from it), or to any matter which is known, is not, and should not be taken as, an acknowledgement or admission or any form of suggestion that prior publication (or information derived from it) or known matter forms part of the common general knowledge in the field of endeavour to which this specification relates.

At present, to perform maintenance and repair of heavy machinery, such as in earthmoving and mining applications, when it is necessary for a person and or service equipment to access the underside of the machinery to be repaired, jacks are normally used.

Such jacks are typically hydraulic or pneumatic jacks, which rely on fluid being maintained under constant high pressure. Once the equipment is jacked up, maintenance personnel typically move under the machinery to carry out the required repair work.

Such hydraulic systems are known to occasionally fail, or leak, which can result in a slow or sudden failure of the system, with potentially catastrophic effects.

This can have occupational health and safety implications, and in many situations, can be quite dangerous. In some situations, maintenance and repair personnel may spend considerable time, typically hours, in this hazardous environment below a heavy load, with only a hydraulic system keeping the machinery in place. The risk can be further increased in many outdoor environments, for example in windy situations, where the machinery is at a fairly high risk of being blown, slipping, or otherwise falling over.

In some situations, this risk may be somewhat minimised, by using packing. That is, after the one or more jack initially lifts the huge machinery to the required elevation, a packing material may be installed thereunder. The packing material suspends the equipment in the elevated position, such that service personnel and maintenance equipment may move about under the elevated equipment. The aforementioned risk is therefore minimised somewhat, as the personnel are only in high danger for as long as it takes them to install the packing material.

Once the maintenance or repair work is completed, the jacks then re-elevate machinery, such that personnel can then remove the packing material, and the equipment may then be lowered to its normal operational position. The personnel are therefore again placed at risk during this packing removal operation.

EP 0 538 208 describes a hoisting device that removes the need for hydraulic or pneumatic components by using a threaded arrangement. The device uses a number of coaxial sleeves that are threaded onto one another and operated by an electric motor. A telescopic rod prevents the upper sleeve from rotating, but allows the other sleeves, including the lower sleeve to rotate. Controlling the raising and lowering of the hoisting device is achieved through the operation of only the electric motor. The device fails to provide a backup hoisting means in the event that this threaded arrangement fails.

The present invention seeks to overcome the disadvantages of the prior art or at least provide an alterative to the prior art devices.

The present invention seeks to provide a jacking device which includes added safety features.

The present invention also seeks to provide a telescoping device which may be compactly stored, and which may elevate a load to a relatively high elevation.

These objectives are solved by the present invention according to the independent claim 1.

Preferably, said device is substantially tubular in shape, wherein said base screw thread is provided on an inner surface of said base member, wherein said upper screw thread is provided on an outer surface of said upper member, and, wherein said first and second screw threads are provided on the inner and outer surfaces of the or each intermediate member.

Preferably, the jacking device also further includes a gear device, adapted to permit rotation of said intermediate member as said drive means is operated.

Preferably, said gear device includes:
a first gear wheel operatively attached to said linear bearing, and adapted to be driven by said drive means; and,
a second gear wheel operatively attached to said intermediate member, and operatively engaged with said first gear wheel, which is adapted to permit rotation of said intermediate member as said drive means is rotated.

Also preferably, the jacking device is embodied wherein said gear device is driven by an electric drive means.

Preferably, when said upper surface is moved to a final position, said hydraulic cylinder retracts slightly such that said screw threads substantially support any load on said jacking device.

Also preferably, when said upper surface is to be moved, said hydraulic cylinder is raised slightly to relieve any load provided on said screw threads, and then said hydraulic cylinder and said drive motor are substantially simultaneously operated to effect raising/lowering of said jacking device.

Preferably, said controller is operable by said user via a keyboard, PDA or other input device operatively connected to said controller via a communications channel, including via a wired or wireless channel provided either locally to or remotely from said jacking device.

Also preferably, said jacking device is operatively connected to at least one other jacking device, the jacking devices being controlled to separately or simultaneously operate to lift a load.

In a further broad form, the present invention provides a method of operating a jacking device.

The method preferably includes
positioning at least one jacking device, as claimed in any one of claims 1 to 7, intermediate a substrate surface and said load;
operating a controller to control the raising or lowering of an upper surface and thereby raise or lower said load.

Also preferably, a plurality of jacking devices are positioned intermediate the substrate surface and said load, and, wherein said controller receives input information from a user and each of said plurality of jacking devices to control the raising or lowering of said load.

### BRIEF DESCRIPTION OF THE DRAWINGS

The present invention will become more fully understood from the following description of preferred but non-limiting embodiments thereof, described in connection with the accompanying drawings wherein:

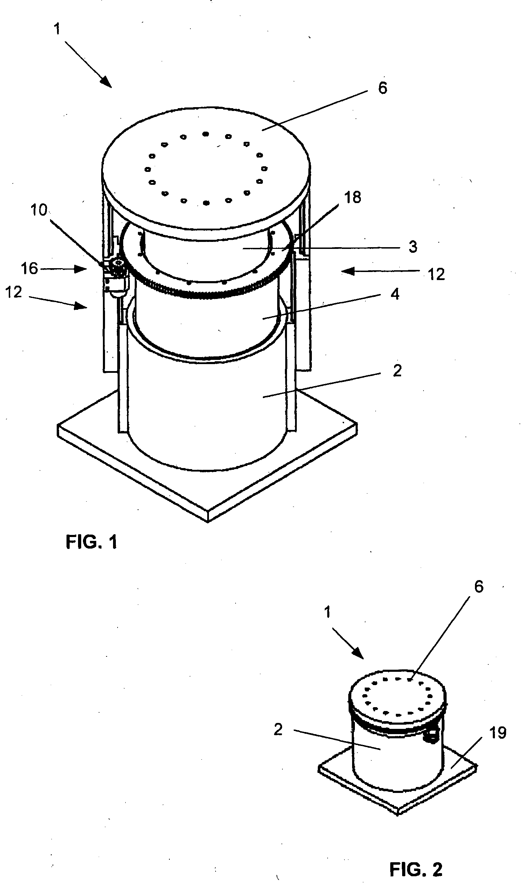

Fig. 1 illustrates an isometric view of the jacking device in accordance with a preferred embodiment of the present invention in an extended position;
Fig. 2 illustrates the device shown in Fig. 1 but in the retracted position;

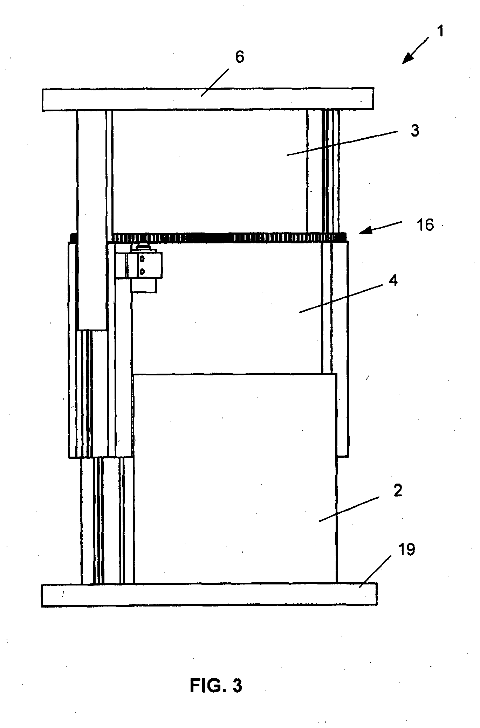

Fig. 3 illustrates an elevational view of the device of Fig. 1;

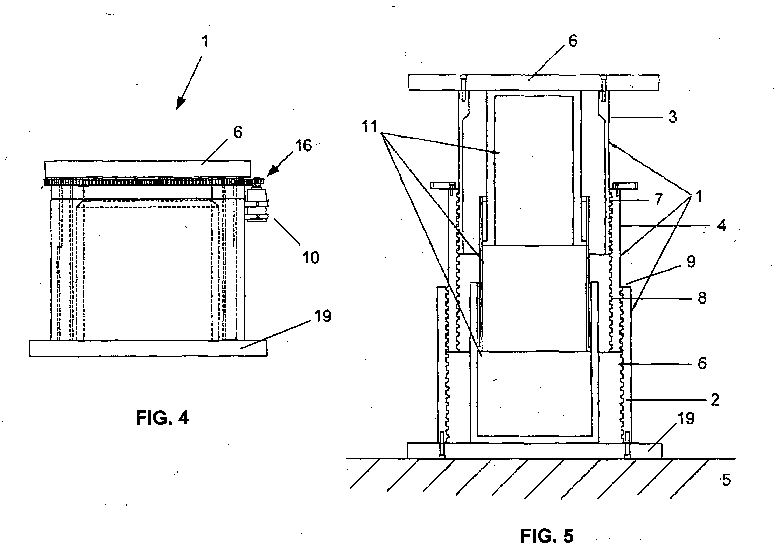

Fig. 4 illustrates an elevational view of the device of Fig. 2 in the compressed position;
Fig. 5 shows a sectional view of the device;

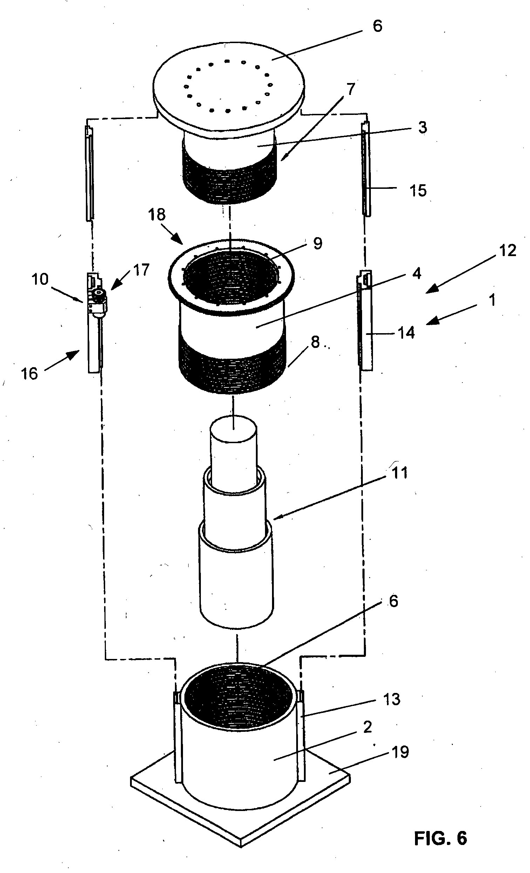

Fig. 6 shows an exploded view of the device of the present invention;
Fig. 7 shows a diagram of the controller to operate the jacking device; and,
Fig. 8 shows a diagram showing the control of a plurality of jacking devices.

### DETAILED DESCRIPTION OF PREFERRED EMBODIMENTS

Throughout the drawings, like numerals will be used to identify similar features, except where expressly otherwise indicated.

The jacking device 1, which is typically substantially tubular/cylindrical in shape, includes a base member 2, an upper member 3, and, at least one intermediate member 4.

The base member 1 includes a base surface 19 adapted to engage a substrate surface 5, and includes a screw thread 6, which is shown to be provided on an inner surface of the base member 2.

The upper member 3 has an upper surface 6 which is adapted to engage a load or object to be raised or lowered. The upper member 3 is shown to be provided with a screw thread 7 on its outer surface.

An intermediate member 4 is provided between the base member 2 and the upper member 3. Additional intermediate members 4 could optionally be provided. Each intermediate member 4 includes screw threads 8 and 9, provided on the outer and inner surfaces of the intermediate member 4, to engage with and cooperate with the screw threads of the adjacent members.

In the drawings, screw thread 8 on the outer surface of intermediate member 4 engages and cooperates with screw thread 6 on the inner surface of base member 2. Also, screw thread 9 on the inner surface of intermediate member 4 engages and cooperates with screw thread 7 on the outer surface of upper member 3.

Drive means permits movement of each member 2, 3 and 4 relative to its adjacent member. For example, intermediate member 4 is adapted to rotate and move upwards or downwards relative to base member 2. Upper member 3 is adapted to move upwards and downwards relative to intermediate member 4. Upper member 3 is preferably restricted from rotating axially as it is raised or lowered, as will be hereinafter described.

A drive means may be embodied in a variety of forms. The drive means shown in the drawings illustrates a primary drive means embodied as a two stage telescopic hydraulic cylinder 11, and, an electric drive motor 10. It will however be appreciated by persons skilled in the art that other versions of drive means may be embodied to achieve similar functions.

Also shown in the drawings is the inclusion of a linear bearing 12 on each side of the device 1 which permits vertical raising/lowering of the upper surface 6 whilst substantially preventing rotation of movement of the upper member 3 relative to the base member 2 but whilst still permitting rotational movement of the intermediate member 4. The linear bearing 12 typically includes three components, namely a base component 13, an intermediate component 14 and an upper component 15 each of which slidably connect to substantially prevent rotational movement of the upper member 3 relative to base member 2.

Also shown in the drawings is the provision of a gear device 16 which includes a first gear or smaller gear 17 which is operatively attached to the linear bearing 16 and is adapted to be driven by drive motor 10, and, a second gear 18 which is operatively attached to the intermediate member 4 and which operatively engages with the first gear wheel 17, and which is adapted to rotate the intermediate member 4 as the drive means 10 is rotated. This gearing device 16 is preferably driven by an electric drive means 10.

A hydraulic cylinder 11 is also provided which substantially vertically raises or lowers the upper member 3 relative to the base member 2. Illustrated is a two stage telescopic hydraulic cylinder, but it will be appreciated that other appropriate drive means may be alternatively provided.

To operate the device, a controller is provided which is operable by a user to control the raising or lower of the jacking device and to operate the drive means.

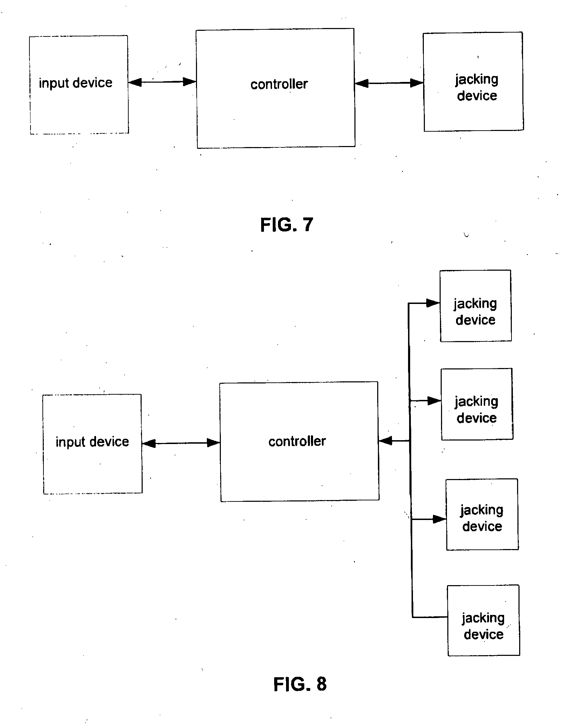

As shown in Figs. 7 and 8, the controller may control the operation of one or more jacking devices, via a user operated input device. The user operated input device may be a keyboard, computer, PDA or other input device into which a user may input instructions. It may be provided local to the jacking device or remotely, via a wired or wireless communications device.

The controller controls the simultaneous operation of a plurality of jacking devices 1, and for each device control the pair of drive means 10 and 11 to thereby effect substantially vertical movement of the upper member 3 relative to the base member 2 via a first drive means 11 and, cooperative rotational movement of the intermediate member 4 via a second drive means 10.

The first drive means 11 is embodied as a hydraulic cylinder, and the second drive means 10 is embodied as an electric drive motor. Alternatives will be apparent to persons skilled in the art.

In use, the basic operation may typically be as follows. As hydraulic pressure is supplied to the telescopic cylinder 11 from a high pressure circuit, low pressure may be applied to the screw drive motor 10.

Any load is lifted substantially by the hydraulic cylinder 11 whilst the screw drive motor 10 rotates the intermediate member 4 to "follow" the hydraulic cylinder 11 by screwing itself out of the lower base member 2 and simultaneously extending the upper member 3.

Once in the elevated position, the hydraulic cylinder 11 slightly retracts whilst the screw is held stationary so the load is now bearing on the screw thread alone. This effectively packs the load by automatic mechanical means.

To lower the load, the hydraulic cylinder 11 is first operated to travel up slightly to relieve the load from the screw threads and to allow it to begin to rotate in the down direction. At this point, the cylinder 11 then switches to the down direction with the screw thread staying just ahead of it. If at any stage the hydraulic cylinder 11 or hoses should fail, the load will be instantaneously transferred to the screw threads while traveling in either direction.

It will therefore be understood by a person skilled in the art that once in the locked position, in the event of any failure, which can occasionally occur in hazardous situations, the sudden or slow failure of the system should be overcome. Maintenance and repair personnel and equipment can therefore be safely brought underneath any heavy load with the risk of any accidental falling of the load being substantially minimized.

It will be appreciated that in use, a plurality of such jacking devices may be simultaneously used. Control circuitry may be used to simultaneously operate the various drive means, etc. such that correct proportional balancing of the load via a number of these jacking devices may be achieved. Various sensors or monitors may be used to ensure that each of the devices either operates in unison or as otherwise required, to take into consideration variations such as unequal load distribution, environment factors such as wind, etc.

It will be appreciated by persons skilled in the art that numerous variations and modifications may be made to the jacking device as hereinbefore described.

## Claims

1. A jacking device (1), including:
a base member (2), including a base surface (19) adapted to engage a substrate surface, having a base screw thread;
an upper member (3), having an upper surface (6) adapted to engage a load to be raised or lowered, having an upper screw thread;
at least one intermediate member (4), positioned between said base member (2) and said upper member (3), each intermediate member (4) including first and second screw threads adapted to engage a respective screw thread of an adjacent member;
drive means, adapted to permit movement of at least one of said members relative to its adjacent member to thereby raise or lower said upper surface (6),
**characterised in that** said drive means includes:
a primary hydraulic drive cylinder (11) positioned between said base surface (19) and said upper surface (6) to substantially vertically raise/lower said upper surface (6) relative to said base surface (19); and,
a backup electric drive motor (10) to rotate said intermediate member (4);
a linear bearing (12), to substantially prevent rotational movement of said upper and base members whilst permitting rotation of said intermediate member (4) as said drive means is operated;
a controller, operable by a user to control the raising/lowering of said jacking device (1) and to operate said drive means, wherein said controller controls the simultaneous operation of said drive means to thereby effect substantially vertical movement of said upper surface (6) relative to said base surface (19) via said primary drive cylinder (11), and, permit cooperative rotational movement of said intermediate member (4) via said backup drive motor (10).

2. A jacking device (1) as claimed in claim 1, wherein said device is substantially tubular in shape, wherein said base screw thread is provided on an inner surface of said base member (2), wherein said upper screw thread is provided on an outer surface of said upper member (3), and, wherein said first and second screw threads are provided on the inner and outer surfaces of said intermediate member (4).

3. A jacking device (1) as claimed in claims 1 or 2, including a gear device including:
a first gear wheel operatively attached to said linear bearing, and adapted to be driven by said backup motor (10); and,
a second gear wheel operatively attached to said intermediate member (4), and be operatively engaged with said first gear wheel, which is adapted to permit rotation of said intermediate member (4) as said backup motor (10) is rotated.

4. A jacking device (1) as claimed in any one of claims 1 to 3, wherein, when said upper surface (6) is moved to a final position, said hydraulic cylinder (11) retracts slightly such that said screw threads substantially support any load on said jacking device (1).

5. A jacking device (1) as claimed in any one of claims 1 to 4, wherein, when said upper surface (6) is to be moved, said hydraulic cylinder (11) is raised slightly to relieve any load provided on said screw threads, and then said hydraulic cylinder (11) and said backup drive motor (10) are substantially simultaneously operated to effect raising/lowering of said jacking device (1).

6. A jacking device (1) as claimed in any one of claims 1 to 5, wherein said controller is operable by said user via a keyboard, PDA or other input device operatively connected to said controller via a communications channel, including via a wired or wireless channel provided either locally to or remotely from said jacking device (1).

7. A jacking device (1) as claimed in any one of claims 1 to 6, operatively connected to at least one other jacking device (1), the jacking devices (1) being controlled to separately or simultaneously operate to lift a load.

8. A method of jacking a load, including the steps of:
positioning at least one jacking device (1), as claimed in any one of claims 1 to 7, intermediate a substrate surface and said load;
operating a controller to control the raising or lowering of an upper surface (6) and thereby raise or lower said load.

9. A method of jacking a load as claimed in claim 8, wherein a plurality of jacking devices (1) are positioned intermediate the substrate surface and said load, and, wherein said controller receives input information from a user and each of said plurality of jacking devices (1) to control the raising or lowering of said load.

## Patentansprüche

1. Eine Aufbockvorrichtung (1), die folgende Merkmale aufweist:
ein Basisbauglied (2), das eine Basisoberfläche (19) umfasst, die angepasst ist, eine Substratoberfläche in Eingriff zu nehmen, mit einem Basisschraubengewinde;
ein oberes Bauglied (3) mit einer oberen Oberfläche (6), die angepasst ist, eine anzuhebende oder zu senkende Last in Eingriff zu nehmen, mit einem oberen Schraubengewinde;
zumindest ein Zwischenbauglied (4), das zwischen dem Basisbauglied (2) und dem oberen Bauglied (3) positioniert ist, wobei jedes Zwischenbauglied (4) erste und zweite Schraubengewinde umfasst, die angepasst sind, ein jeweiliges Schraubengewinde eines benachbarten Bauglieds in Eingriff zu nehmen;
eine Antriebseinrichtung, die angepasst ist, eine Bewegung zumindest eines der Bauglieder relativ zu einem benachbarten Bauglied desselben zuzulassen, um dadurch die obere Oberfläche (6) anzuheben oder zu senken,
**dadurch gekennzeichnet, dass** die Antriebseinrichtung folgende Merkmale aufweist:
einen primären hydraulischen Antriebszylinder (11), der zwischen der Basisoberfläche (19) und der oberen Oberfläche (6) positioniert ist, um die obere Oberfläche (6) relativ zu der Basisoberfläche (19) im Wesentlichen vertikal anzuheben/zu senken; und
einen elektrischen Antriebsunterstützungsmotor (10), um das Zwischenbauglied (4) zu drehen;
ein Linearlager (12), um eine Drehbewegung der oberen Bauglieder und der Basisbauglieder im Wesentlichen zu verhindern, wohingegen eine Drehung des Zwischenbauglieds (4) zugelassen ist, während die Antriebseinrichtung in Betrieb ist;
eine Steuereinrichtung, die durch einen Benutzer betreibbar ist, um das Anheben/Senken der Aufbockvorrichtung (1) zu steuern und die Antriebseinrichtung zu betreiben, wobei die Steuereinrichtung den gleichzeitigen Betrieb der Antriebseinrichtung steuert, um dadurch eine im Wesentlichen vertikale Bewegung der oberen Oberfläche (6) relativ zu der Basisoberfläche (19) über den primären Antriebszylinder (11) zu bewirken und eine zusammenwirkende Drehbewegung des Zwischenbauglieds (4) über den Unterstützungsantriebsmotor (10) zuzulassen.

2. Eine Aufbockvorrichtung (1) gemäß Anspruch 1, wobei die Vorrichtung im Wesentlichen röhrenförmig ist, wobei das Basisschraubengewinde auf einer Innenoberfläche des Basisbauglieds (2) vorgesehen ist, wobei das obere Schraubengewinde auf einer Außenoberfläche des oberes Bauglieds (3) vorgesehen ist und wobei das erste und das zweite Schraubengewinde auf der Innenoberfläche und der Außenoberfläche des Zwischenbauglieds (4) vorgesehen sind.

3. Eine Aufbockvorrichtung (1) gemäß Anspruch 1 oder 2, die eine Getriebevorrichtung umfasst, die folgende Merkmale aufweist:
ein erstes Getrieberad, das an dem Linearlager wirksam angebracht ist und angepasst ist, durch den Unterstützungsmotor (10) angetrieben zu werden; und
ein zweites Getrieberad, das an dem Zwischenbauglied (4) wirksam angebracht und mit dem ersten Getrieberad wirksam in Eingriff genommen ist, das angepasst ist, eine Drehung des Zwischenbauglieds (4) zuzulassen, während der Unterstützungsmotor (10) gedreht wird.

4. Eine Aufbockvorrichtung (1) gemäß einem der Ansprüche 1 bis 3, bei der, wenn die obere Oberfläche (6) zu einer endgültigen Position bewegt wird, der hydraulische Zylinder (11) sich leicht zurückzieht, so dass die Schraubengewinde im Wesentlichen eine beliebige Last auf der Aufbockvorrichtung (1) tragen.

5. Eine Aufbockvorrichtung (1) gemäß einem der Ansprüche 1 bis 4, bei der, wenn die obere Oberfläche (6) bewegt werden soll, der hydraulische Zylinder (11) leicht angehoben wird, um eine auf den Schraubengewinden vorgesehene beliebige Last zu verringern, und dann der hydraulische Zylinder (11) und der Unterstützungsantriebsmotor (10) im Wesentlichen gleichzeitig betrieben werden, um ein Anheben/Senken der Aufbockvorrichtung (1) zu bewirken.

6. Eine Aufbockvorrichtung (1) gemäß einem der Ansprüche 1 bis 5, bei der die Steuereinrichtung durch den Benutzer über eine Tastatur, einen PDA oder eine andere Eingabevorrichtung betreibbar ist, die mit der Steuervorrichtung über einen Kommunikationskanal wirksam verbunden ist, einschließlich über einen drahtgebundenen oder einen drahtlosen Kanal, der entweder lokal zu oder entfernt von der Aufbockvorrichtung (1) vorgesehen ist.

7. Eine Aufbockvorrichtung (1) gemäß einem der Ansprüche 1 bis 6, die mit zumindest einer anderen Aufbockvorrichtung (1) wirksam verbunden ist, wobei die Aufbockvorrichtungen (1) dahin gehend gesteuert werden, separat oder gleichzeitig zu wirken, um eine Last zu heben.

8. Ein Verfahren zum Aufbocken einer Last, das folgende Schritte aufweist:
Positionieren zumindest einer Aufbockvorrichtung (1) gemäß einem der Ansprüche 1 bis 7 zwischen einer Substratoberfläche und der Last;
Betreiben einer Steuereinrichtung, um das Anheben oder Senken einer oberen Oberfläche (6) zu steuern und dadurch die Last anzuheben oder zu senken.

9. Ein Verfahren zum Aufbocken einer Last gemäß Anspruch 8, wobei eine Mehrzahl von Aufbockvorrichtungen (1) zwischen der Substratoberfläche und der Last positioniert ist und wobei die Steuereinrichtung Eingabeinformationen von einem Benutzer und jeder der Mehrzahl von Aufbockvorrichtungen (1) empfängt, um das Anheben oder Senken der Last zu steuern.

## Revendications

1. Dispositif de levage (1), comprenant:
un élément de base (2), comportant une surface de base (19) adaptée pour venir en prise avec une surface de substrat, présentant un filet de vis de base;
un élément supérieur (3) présentant une surface supérieure (6) adaptée pour venir en prise avec une charge à lever ou à abaisser, présentant un filet de vis supérieur;
au moins un élément intermédiaire (4) positionné entre ledit élément de base (2) et ledit élément supérieur (3), chaque élément intermédiaire (4) comportant des premier et deuxième filets de vis adaptés pour venir en prise avec un filet de vis respectif d'un élément adjacent;
un moyen d'entraînement, adapté pour permettre le déplacement d'au moins l'un desdits éléments par rapport à son élément adjacent pour ainsi lever ou abaisser ladite surface supérieure (6),
**caractérisé par le fait que** ledit moyen d'entraînement comporte:
un cylindre d'entraînement hydraulique primaire (11) positionné entre ladite surface de base (19) et ladite surface supérieure (6) destiné à lever/abaisser sensiblement verticalement ladite surface supérieure (6) par rapport à ladite surface de base (19); et
un moteur d'entraînement électrique de secours (10) destiné à faire tourner ledit élément intermédiaire (4);
un palier linéaire (12), destiné à empêcher substantiellement le mouvement de rotation desdits éléments supérieur et de base tout en permettant la rotation dudit élément intermédiaire (4) au fur et à mesure que ledit moyen d'entraînement est actionné;
un dispositif de commande, pouvant être actionné par un utilisateur pour commander la montée/descente dudit dispositif de levage (1) et pour actionner ledit moyen d'entraînement, où ledit dispositif de commande commande le fonctionnement simultané dudit moyen d'entraînement pour ainsi effectuer un mouvement sensiblement vertical de ladite surface supérieure (6) par rapport à ladite surface de base (19) par l'intermédiaire dudit cylindre d'entraînement primaire (11), et permettre le mouvement de rotation coopératif dudit élément intermédiaire (4) par l'intermédiaire dudit moteur d'entraînement de secours (10).

2. Dispositif de levage (1) selon la revendication 1, dans lequel ledit dispositif est de forme sensiblement tubulaire, dans lequel ledit filet de vis de base est prévu sur une surface intérieure dudit élément de base (2), dans lequel ledit filet de vis supérieur est prévu sur une surface extérieure dudit élément supérieur (3), et dans lequel lesdits premier et deuxième filets de vis sont prévus sur les surfaces intérieure et extérieure dudit élément intermédiaire (4).

3. Dispositif de levage (1) selon la revendication 1 ou 2, comportant un dispositif d'engrenage comportant:
une première roue dentée fixée de manière active audit palier linéaire et adaptée pour être entraînée par ledit moteur de secours (10); et,
une deuxième roue dentée fixée de manière active audit élément intermédiaire (4) et en prise de manière active avec ladite première roue dentée, laquelle est adaptée pour permettre la rotation dudit élément intermédiaire (4) au fur et à mesure que tourne ledit moteur de secours (10).

4. Dispositif de levage (1) selon l'une quelconque des revendications 1 à 3, dans lequel, lorsque ladite surface supérieure (6) est déplacée vers une position finale, ledit cylindre hydraulique (11) se rétracte légèrement de sorte que lesdits filets de vis supportent substantiellement toute charge sur ledit dispositif de levage (1).

5. Dispositif de levage (1) selon l'une quelconque des revendications 1 à 4, dans lequel, lorsque ladite surface supérieure (6) doit être déplacée, ledit cylindre hydraulique (11) est légèrement soulevé pour soulager toute charge prévue sur lesdits filets de vis, puis ledit cylindre hydraulique (11) et ledit moteur d'entraînement de secours (10) sont actionnés sensiblement simultanément pour effectuer la montée/ descente dudit dispositif de levage (1).

6. Dispositif de levage (1) selon l'une quelconque des revendications 1 à 5, dans lequel ledit dispositif de commande peut être actionné par ledit utilisateur par l'intermédiaire d'un clavier, d'un assistant numérique personnel ou d'un autre dispositif d'entrée connecté activement audit dispositif de commande par l'intermédiaire d'un canal de communication, y compris par l'intermédiaire d'un canal câblé ou sans fil prévu localement ou à distance dudit dispositif de levage (1).

7. Dispositif de levage (1) selon l'une quelconque des revendications 1 à 6, connecté de manière active à au moins un autre dispositif de levage (1), les dispositifs de levage (1) étant commandés de manière à fonctionner séparément ou simultanément pour soulever une charge.

8. Procédé de levage d'une charge, comportant les étapes consistant à:
positionner au moins un dispositif de levage (1) selon l'une quelconque des revendications 1 à 7 entre une surface de substrat et ladite charge;
actionner un dispositif de commande pour commander la montée ou la descente d'une surface supérieure (6) et ainsi faire monter ou descendre ladite charge.

9. Procédé de levage d'une charge selon la revendication 8, dans lequel une pluralité de dispositifs de levage (1) sont positionnés entre la surface du substrat et ladite charge, et dans lequel ledit dispositif de commande reçoit des informations d'entrée d'un utilisateur et de chacun de ladite pluralité de dispositifs de levage (1) pour commander la montée ou la descente de ladite charge.
